# EUROPEAN PATENT APPLICATION

(11) **EP 1 330 064 A2**
(43) Date of publication of application: **23.07.2003**
(21) Application number: 02258340.5
(22) Date of filing: 03.12.2002
(51) Int. Cl.: H04L 5/14, H04L 1/16

(54) **Information communication apparatus and information communication method**

(30) Priority: 04.12.2001 JP 2001370331
(71) Applicant: Pioneer Corporation, Tokyo-to (JP)
(72) Inventor: Kondo, Hiromi, c/o Pioneer Corporation, Tokorozawa-shi, Saitama-ken (JP); Usuba, Hidemi, c/o Pioneer Corporation, Tokorozawa-shi, Saitama-ken (JP)
(74) Representative: Townsend, Victoria Jayne

(57) **Abstract**

An information communication apparatus (200) includes: a data preparation section (16) which generates communication data having a predetermined data form for transfer to a serial bus based on data such as audio or video data; a communication section (100) including a communication layer; and a control section (101) which controls the data preparation section (16) and communication section (100), and determines a data transmission speed based on issuance of a transaction and reception of an acknowledge packet.

## Description

The present invention relates to a technical field concerning a transmission speed of data communication, particularly to a technical field of a transmission speed setting in a serial transmission system in conformity with IEEE 1394 standard.

In recent years, with rapid spread of digital contents and digitization of package media, there has been an increasing importance of a technique of IEEE 1394 standard (formal name is "IEEE Std. 1394 to 1995 IEEE Standard for a High Performance Serial Bus") which has an effect useful for transfer of digital data.

In general, the IEEE 1394 standard is appropriate for transferring AV digital data such as audio and video data.

In the IEEE 1394 standard, a plurality of information processing apparatuses (hereinafter referred to simply as nodes) are connected to one another via a serial bus, and information transmission for a plurality of channels is standardized to be executed among these nodes in a time division manner (a system connected via one serial bus is standardized such that 63 different channels at maximum can be used to transmit information in the standard). Furthermore, high-speed serial transmission is standardized to be performed at any transmission speed of 100 Mbits per second (Mbps) (hereinafter referred to as S100), 200 Mbps (hereinafter referred to as S200), and 400 Mbps (hereinafter referred to as S400).

Moreover, in the IEEE 1394 standard, when another node is newly connected to a group of nodes already connected to one another via the serial bus (i.e., a bus connection time) or when the node is disconnected from the node group (i.e., a bus release time), initialization of the serial bus, so-called bus reset, is standardized to be executed. With the bus reset, a predetermined processing is executed as described later, and a new connection mode of the serial bus (hereinafter referred to as topology) is constructed, so that a degree of freedom in the connection mode is enhanced, and user friendliness is enhanced.

Furthermore, the IEEE 1394 standard includes two types of data transmission systems: an asynchronous transfer mode; and an isochronous transfer mode.

The asynchronous transfer mode refers to communication guaranteed to securely transmit a packet to a destination node. In the asynchronous transfer mode, a transmission node transmits header information and actual data to a designated destination node, and the node having received the data returns acknowledgment information indicating the reception (reception information), for example, a so-called acknowledge packet to confirm the reception.

Moreover, the isochronous transfer mode refers to a communication performed in synchronization with a cycle start packet transmitted at a given interval (125 µsec) by only one cycle master node, disposed on the bus, for managing a clock common to the bus. In the isochronous transfer mode, instead of transmitting the packet to a specific node, any one of a plurality of channels is used to transmit the packet (isochronous packet described later) to the whole bus, and a node having received the data does not return the acknowledge packet, different from the asynchronous transfer mode.

In the IEEE 1394 standard, a method of determining a maximum transmission speed of a packet in the asynchronous transfer mode (hereinafter referred to as the asynchronous packet) or a packet in the isochronous transfer mode (hereinafter referred to as the isochronous packet) between a node which is to transfer the data (hereinafter referred to as the self node) and a node which receives the data (hereinafter referred to the opposite node) has heretofore comprised: (1) recognizing the connection mode of all nodes in a transmission channel (hereinafter referred to as all the channel nodes), and acquiring a transmission speed (PHY SPEED) for physical layers (physical layer chips) of all the channel nodes; (2) acquiring a transmission speed (LINK SPEED) for link layers (link layer chips) of the opposite node; and (3) analyzing the topology.

### (1) Acquisition of Transmission Speed (PHY SPEED) in Physical Layers of All Channel Nodes

The acquiring of the transmission speeds (PHY SPEED) in the physical layers of all the channel nodes comprises: acquiring self identification information (self-ID packet) transmitted from the respective nodes after the bus reset to acquire the transmission speed.

The self identification information (self-ID packet) in each node is transmitted as follows.

When the bus reset occurs, first a process of identifying all connection modes of the connected nodes (tree identify) is performed. In this process, orientation to a root node is determined with respect to all connected ports, so that one node is finally selected as the root node.

Subsequently, the self identification process of each node (self identify) is performed. In this process, each node acquires only identification information (physical layer ID) of the bus necessary for the identification, and transmits the self identification information (self-ID packet) necessary for bus management, such as the physical layer ID and information of the transmission speed of the self node.

Each node acquires the self identification information (self-ID packet) of another node transmitted in this manner, and acquires the transmission speed information of each node in all the channel nodes.

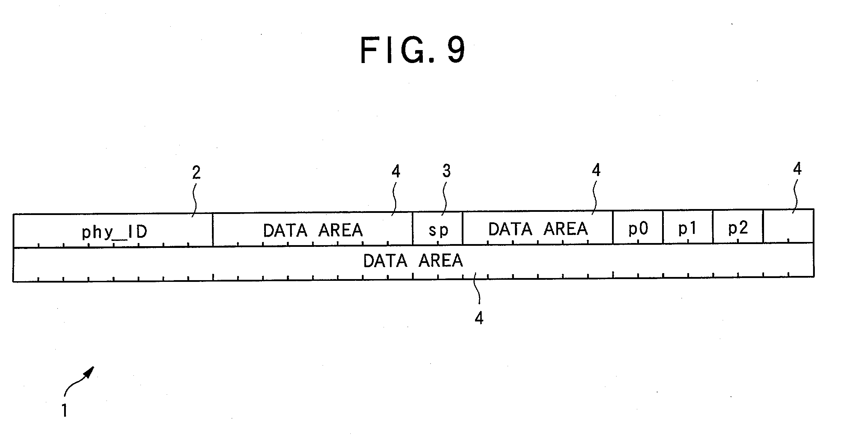

It is to be noted that FIG. 9 is a diagram showing data structure of self identification information (self-ID packet) 1 transmitted by each node. In the diagram, (phy ID) 2 is identification information of the physical layer in the self node, (SP) 3 is information of the transmission speed in the physical layer, p0 to p2 are information of a connection situation of the self node described later, and the other areas are data areas including the other information.

Moreover, another node reads the (SP) 3 to acquire the transmission speed. For example, with "00₂", S100 is indicated, with "01₂", S200 is indicated, and with "10₂", S400 is indicated. Furthermore, the self identification information (self-ID packet) includes the other data.

### (2) Acquisition of Transmission Speed (LINK SPEED) in Link Layer of Opposite Node

The acquiring of the transmission speed (LINK SPEED) in the link layer of the opposite node comprises: transmitting various types of communication request information indicating a communication request for data communication in the asynchronous transfer mode (in the 1394 standard, the communication request information is referred to as a transaction and the transmission of the communication request information is referred to as issuance of the transaction); and acquiring the transmission speed of the link layer written in a configuration ROM in which information peculiar to the apparatus is stored.

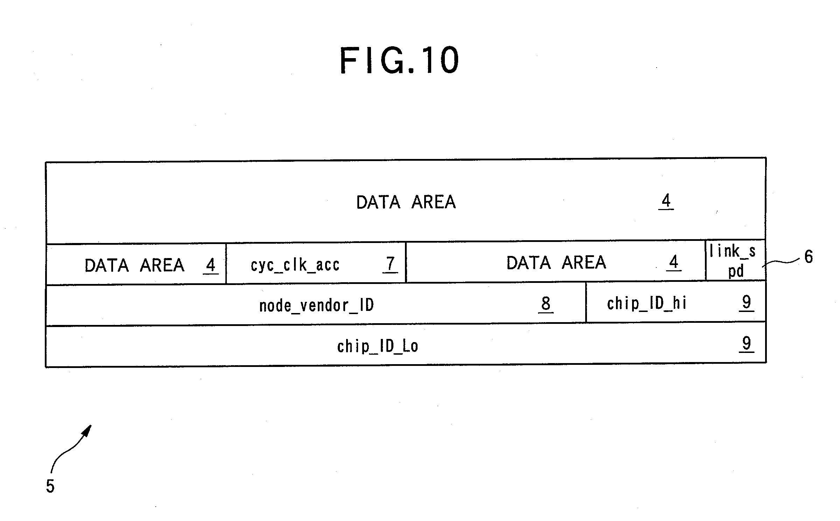

Concretely, the self node issues the transaction, reads data for four bytes (one quadlet) from a bus information block 5 in the configuration ROM shown in FIG. 10 in the opposite node, acquires (link spd) 6 with the transmission speed written therein in the bus information block, and acquires the transmission speed of the opposite node.

It is to be noted that similarly as the physical layer (SP)3, for example, "00₂", "01₂", "10₂" are described in the (link spd) 6 and indicate S100, S200, and S400, respectively. Moreover, this bus information block 5 includes: a bit (cyc clk acc) 7 indicating a clock accuracy of a synchronous communication time; (node vendor ID) 8, (chip ID) 9 indicating IDs unique to the apparatus; and other data areas 4.

### (3) Topology Analysis

The topology analysis comprises: determining the maximum transmission speed at which the data can be transmitted based on the transmission speed of all the channel nodes acquired as described above and the transmission speed at which the reception is possible in the connected opposite node. That is, in the topology analysis, it is judged whether or not another node is connected between the self and opposite nodes, and the transmission speed is determined in the connection situation.

It is to be noted that a method of judging the connection of another node between the self and opposite nodes comprises: analyzing the connection situations in the node, such as the connection situation of a "node connected on a route side", "node connected on a side opposite to the route side", and "unconnected node" by p0, p1, p2 of the self identification information (self-ID packet) shown in FIG. 9 to recognize the channel to the opposite node; and acquiring node information in the middle of the channel.

One example in which the transmission speed is determined between the nodes in the conventional IEEE 1394 standard will next be described.

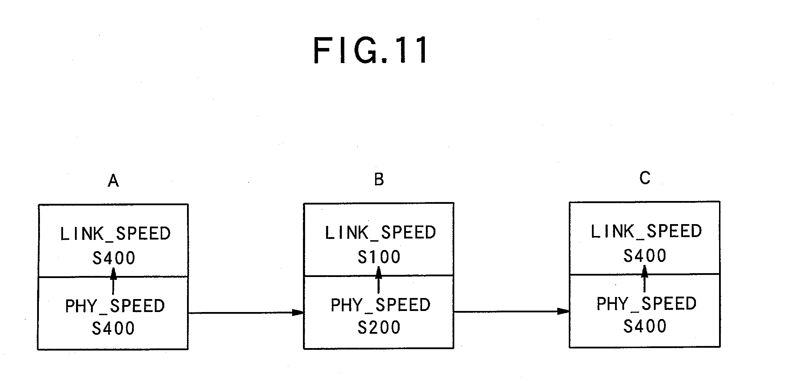

For example, as shown in FIG. 11, an apparatus B exists between an apparatus A which transfers data and an apparatus C to which the data is transferred. The transmission speed (PHY SPEED) in the physical layer of the apparatus A and the transmission speed (LINK SPEED) in the link layer are S400, the transmission speed (PHY SPEED) in the physical layer in the apparatus B is S200, and the transmission speed (LINK SPEED) in the link layer is S100. Moreover, the transmission speed (PHY SPEED) in the physical layer of the apparatus C and the transmission speed (LINK SPEED) in the link layer are S400. In this case, the maximum transmission speed at which the transmission between the nodes via the link layers of the apparatuses A and B is possible is S100, and the maximum transmission speed at which the transmission between the nodes via the link layers of the apparatuses A and C is possible is S200.

However, the above-described determination method of the transmission speed in the conventional IEEE 1394 standard needs to comprise: (1) acquiring the transmission speeds (PHY SPEED) in the physical layers of all the channel nodes; (2) acquiring the transmission speeds (LINK SPEED) in the link layers of the opposite node (including the other nodes in the transfer channel); and (3) analyzing the topology as described above. If these steps are not performed, it is impossible to determine the maximum transmission speed at which the transmission is possible. There is a problem that the performing of these steps requires much time.

Moreover, when there are a large number of nodes, the topology analysis becomes complicated. The number of processes required until the transmission speed is determined increases. This causes a problem that a process efficiency is deteriorated.

Furthermore, the IEEE 1394 standard concretely includes IEEE 1394 to 1995 standards and IEEE 1394a to 2000 standards. The IEEE 1394 to 1995 standards do not include the above-described (link spd) which is disposed in the bus information block and in which the transmission speed is described. Therefore, the transmission speed in the link layer is judged to be unclear, and this also causes a problem that it is impossible to set an appropriate transmission speed.

The present invention has been developed in consideration of the above-described problems, and an object thereof is to provide an information communication apparatus in which a transmission speed between nodes in an IEEE 1394 standard can appropriately be set and a process efficiency in a determination process of the transmission speed can be enhanced.

The above object of the present invention can be achieved by an information communication apparatus of the present invention for setting any one of a plurality of transmission speeds to a data transmission speed as a transmission speed at a time when data communication with another information communication apparatus is performed, and for performing the data communication. The apparatus is provided with: a transmission device which uses any one of the plurality of transmission speeds to transmit confirmation information for confirming whether or not the data communication with said another information communication apparatus can be performed; a detection device which detects reception information indicating that said another information communication apparatus has normally received the confirmation information, the reception information being transmitted from said another information communication apparatus; and a determination device which determines the data transmission speed based on presence or absence of detection of the reception information in the detection device.

According to the present invention, any one of a plurality of transmission speeds is used to transmit confirmation information, reception information indicating that another information communication apparatus has normally received the confirmation information is detected, and a data transmission speed is determined based on presence or absence of detection of the reception information.

Therefore, the data transmission speed of a transmission time of the data can be determined by the transmission speed at which the confirmation information is normally received in a plurality of transmission speeds. Moreover, it is possible to judge whether or not the information is normally received only by the presence or absence of detection of the reception information. Therefore, an optimum transmission speed can easily be set.

In one aspect of the present invention, the determination device is provided with: a setting device which sets the transmission speed at a time when the transmission device has transmitted the confirmation information to the data transmission speed, when the detection device detects the reception information; and a retransmission device which retransmits the confirmation information at the transmission speed different from the transmission speed at the time when the transmission device has transmitted the confirmation information, when the detection device does not detect the reception information.

According to this aspect, any one of a plurality of transmission speeds is used to transmit confirmation information. When the reception information is detected, the transmission speed of the transmission time of the confirmation information is set to the data transmission speed. When the reception information is not detected, the transmission speed is changed to the transmission speed different from the transmission speed for use in the transmission of the confirmation information and the confirmation information is retransmitted.

Therefore, the reception information indicating that the information is normally received by another information communication apparatus is detected, and thereby the transmission speed at which data communication is possible can be detected. The transmission speed at which the data communication is possible can be set to the data transmission speed. Therefore, the optimum data transmission speed can easily and accurately be set.

In another aspect of the present invention, the retransmission device repeatedly changes the transmission speed and repeatedly retransmits the confirmation information until the detection device detects the reception information.

According to this aspect, the transmission speed is changed and the confirmation information is repeatedly retransmitted until the reception information is detected.

Therefore, the transmission speed at which the data communication is possible can easily be detected, and the appropriate data transmission speed can accurately be set.

In further aspect of the present invention, the retransmission device successively changes the transmission speed to the transmission speed lower than the transmission speed of the confirmation information and retransmits the confirmation information, when the detection device does not detect the reception information.

According to this aspect, when the reception information is not detected, the transmission speed is successively changed to a transmission speed lower than the transmission speed of the confirmation information and the confirmation information is retransmitted.

Therefore, when another information communication apparatus keeps pace with the high transmission speed, process burdens in setting the data transmission speed can be alleviated. Moreover, the transmission speed at which the data communication is possible can easily be detected, and the appropriate data transmission speed can accurately be set.

In further aspect of the present invention, the determination device comprises: a retransmission device which retransmits the confirmation information at the transmission speed different from the transmission speed at the time when the transmission device has transmitted the confirmation information, when the detection device detects the reception information; and a setting device which sets the transmission speed lower than the transmission speed at the time when the confirmation information has been transmitted to the data transmission speed, when the detection device does not detect the reception information.

According to this aspect, any one of a plurality of transmission speeds is used to transmit the confirmation information. When the reception information is detected, the transmission speed is changed to the transmission speed different from the transmission speed of the transmission time of the confirmation information and the confirmation information is retransmitted. When the reception information is not detected, the data transmission speed is set to the transmission speed lower than the transmission speed for use in the transmission of the confirmation information.

Therefore, the reception information indicating that the information is normally received by another information communication apparatus is detected, and thereby the transmission speed at which the data communication is possible can be detected. Moreover, the transmission speed at which the data communication is possible can be set to the data transmission speed, and it is therefore possible to easily set the optimum data transmission speed.

In further aspect of the present invention, the retransmission device repeatedly changes the transmission speed and repeatedly retransmits the confirmation information until the detection device does not detect the reception information.

According to this aspect, the transmission speed is changed and the confirmation information is repeatedly retransmitted until the reception information is not detected any more.

Therefore, the transmission speed at which the data communication is possible can easily be detected, and the appropriate data transmission speed can accurately be set.

In further aspect of the present invention, the retransmission device successively changes the transmission speed to the transmission speed higher than the transmission speed of the confirmation information and retransmits the confirmation information, when the detection device detects said reception information.

According to this aspect, when the reception information is detected, the transmission speed is successively changed to the transmission speed higher than the transmission speed of the confirmation information and the confirmation information is retransmitted.

Therefore, when another information communication apparatus keeps pace with the low transmission speed, the process burdens in setting the data transmission speed can be alleviated. Moreover, the transmission speed at which the data communication is possible can easily be detected, and the appropriate data transmission speed can accurately be set.

In further aspect of the present invention, the transmission device starts the transmission of the confirmation information at a low transmission speed next to a lowest transmission speed.

According to this aspect, the transmission of the confirmation information is started at a low transmission speed next to a lowest transmission speed. When another information communication apparatus keeps pace with the low transmission speed, the process burden in setting the data transmission speed can be alleviated. Moreover, the transmission speed at which the data communication is possible can easily be detected, and the appropriate data transmission speed can accurately be set.

In further aspect of the present invention, the information communication apparatus further comprises: a selection device which selects a change order of the transmission speed of the confirmation information as to whether the retransmission device successively changes the transmission speed to the low transmission speed from the high transmission speed or to the high transmission speed from the low transmission speed to retransmit the confirmation information; and an acquisition device which acquires information of a maximum transmission speed in said another information communication apparatus beforehand, wherein the selection device selects the change order of the transmission speed based on the acquired maximum transmission speed.

According to this aspect, a change order of the transmission speed of the confirmation information is selected based on the maximum transmission speed of another information communication apparatus acquired beforehand.

Therefore, even with the other information communication apparatus which keeps pace with the low transmission speed, or even with the other information communication apparatus which keeps pace with the high transmission speed, the transmission speed at which the data communication is possible can easily be detected, and the appropriate data transmission speed can accurately be set.

In further aspect of the present invention, the confirmation information is communication request information by which said another information communication apparatus is requested to perform the data communication.

According to this aspect, the appropriate data transmission speed can easily and accurately be set before the data communication is performed.

In further aspect of the present invention, the communication with said another information communication apparatus is performed by a serial transmission system.

According to this aspect, the data transmission speed can easily be set with respect to communication which is performed by a serial transmission system.

In further aspect of the present invention, the communication with said another information communication apparatus, the transmission device, and the reception device conform to an Institute of Electrical and Electronic Engineers (IEEE) 1394 standard.

According to this aspect, the appropriate data transmission speed can easily and accurately be set with respect to the communication which conforms to an IEEE 1394 standard.

The above object of the present invention can be achieved by an information communication method of the present invention for setting any one of a plurality of transmission speeds to a data transmission speed as a transmission speed at a time when data communication with another information communication apparatus is performed, and performing the data communication. The method is provided with: a transmission process of using any one of the plurality of transmission speeds to transmit confirmation information for confirming whether or not the data communication with said another information communication apparatus can be performed; a detection process of detecting reception information indicating that said another information communication apparatus has normally received the confirmation information, the reception information being transmitted from said another information communication apparatus; and a determination process of determining the data transmission speed based on presence or absence of detection of the reception information in the detection process.

According to the present invention, any one of a plurality of transmission speeds is used to transmit confirmation information, the reception information indicating that another information communication apparatus has normally received the confirmation information is detected, and the data transmission speed is determined based on the presence orabsence of detection of the reception information.

Therefore, the transmission speed of the transmission time of the data can be determined by the transmission speed at which the confirmation information is normally received in a plurality of transmission speeds. Moreover, it is possible to judge whether or not the information is normally received only by the presence/absence of the detection of the reception information. Therefore, the optimum transmission speed can easily be set.

In one aspect of the present invention, the determination process comprises: a setting process of setting the transmission speed at a time when the confirmation information has been transmitted by the transmission process to the data transmission speed, when the reception information is detected by the detection process; and a retransmission process of retransmitting the confirmation information at the transmission speed different from the transmission speed at the time when the confirmation information has been transmitted by the transmission process, when the reception information is not detected by said detection process.

According to this aspect, any one of a plurality of transmission speeds is used to transmit the confirmation information. When the reception information is detected, the transmission speed of the transmission time of the confirmation information is set to the data transmission speed. When the reception information is not detected, the transmission speed is changed to the transmission speed different from the transmission speed for use in the transmission of the confirmation information and the confirmation information is retransmitted.

Therefore, the reception information indicating that the information is normally received by another information communication apparatus is detected, and thereby the transmission speed at which the data communication is possible can be detected. The transmission speed at which the data communication is possible can be set to the data transmission speed. Therefore, the optimum data transmission speed can easily and accurately be set.

In another aspect of the present invention, the retransmission process comprises the processes of: repeatedly changing the transmission speed and repeatedly retransmitting the confirmation information until the reception information is detected by the detection process.

According to this aspect, the transmission speed is changed and the confirmation information is repeatedly retransmitted until the reception information is detected.

Therefore, the transmission speed at which the data communication is possible can easily be detected, and the appropriate data transmission speed can accurately be set.

In further aspect of the present invention, the retransmission process comprises the processes of: successively changing the transmission speed to the transmission speed lower than the transmission speed of the confirmation information and retransmitting the confirmation information, when the reception information is not detected by the detection process.

According to this aspect, when the reception information is not detected, the transmission speed is successively changed to the transmission speed lower than the transmission speed of the confirmation information and the confirmation information is retransmitted.

Therefore, when another information communication apparatus keeps pace with the high transmission speed, the process burdens in setting the data transmission speed can be alleviated. Moreover, the transmission speed at which the data communication is possible can easily be detected, and the appropriate data transmission speed can accurately be set.

In further aspect of the present invention, the determination process comprises: a retransmission process of retransmitting the confirmation information at the transmission speed different from the transmission speed at the time when the confirmation information has been transmitted by the transmission process, when the reception information is detected by the detection process; and a setting process of setting the transmission speed lower than the transmission speed at the time when the confirmation information has been transmitted to the data transmission speed, when said reception information is not detected by the detection process.

According to this aspect, any one of a plurality of transmission speeds is used to transmit the confirmation information. When the reception information is detected, the transmission speed is changed to the transmission speed different from the transmission speed of the transmission time of the confirmation information and the confirmation information is retransmitted. When the reception information is not detected, the data transmission speed is set to the transmission speed lower than the transmission speed for use in the transmission of the confirmation information.

Therefore, the reception information indicating that the information is normally received by another information communication apparatus is detected, and thereby the transmission speed at which the data communication is possible can be detected. The transmission speed at which the data communication is possible can be set to the data transmission speed. Therefore, the optimum data transmission speed can easily be set.

In further aspect of the present invention, the retransmission process comprises the processes of: repeatedly changing the transmission speed and repeatedly retransmitting the confirmation information until the reception information is not detected by the detection process.

According to this aspect, the transmission speed is changed and the confirmation information is repeatedly retransmitted until the reception information is not detected any more.

Therefore, the transmission speed at which the data communication is possible can easily be detected, and the appropriate data transmission speed can accurately be set.

In further aspect of the present invention, the retransmission process comprises the processes of: successively changing the transmission speed to the transmission speed higher than the transmission speed of the confirmation information and retransmitting the confirmation information, when the reception information is detected by the detection process.

According to this aspect, when the reception information is detected, the transmission speed is successively changed to the transmission speed higher than the transmission speed of the confirmation information and the confirmation information is retransmitted.

Therefore, when another information communication apparatus keeps pace with the low transmission speed, the process burdens in setting the data transmission speed can be alleviated. Moreover, the transmission speed at which the data communication is possible can easily be detected, and the appropriate data transmission speed can accurately be set.

In further aspect of the present invention, the transmission process comprises the processes of: starting the transmission of the confirmation information at a low transmission speed next to a lowest transmission speed.

According to this aspect, the transmission of the confirmation information is started at the low transmission speed next to the lowest transmission speed. When another information communication apparatus keeps pace with the low transmission speed, the process burdens in setting the data transmission speed can be alleviated. Moreover, the transmission speed at which the data communication is possible can easily be detected, and the appropriate data transmission speed can accurately be set.

In further aspect of the present invention, the information communication method further comprises: a selection process of selecting a change order of the transmission speed of the confirmation information as to whether the transmission speed is successively changed to the low transmission speed from the high transmission speed or to the high transmission speed from the low transmission speed to retransmit the confirmation information by the retransmission process; and an acquisition process of acquiring information of a maximum transmission speed in the another information communication apparatus beforehand, wherein the selection process comprises the steps of: selecting the change order of the transmission speed based on the acquired maximum transmission speed.

According to this aspect, the change order of the transmission speed of the confirmation information is selected based on the maximum transmission speed of another information communication apparatus acquired beforehand.

Therefore, even with the other information communication apparatus which keeps pace with the low transmission speed, or even with the other information communication apparatus which keeps pace with the high transmission speed, the transmission speed at which the data communication is possible can easily be detected, and the appropriate data transmission speed can accurately be set.

In further aspect of the present invention, the confirmation information is communication request information by which said another information communication apparatus is requested to perform the data communication.

According to this aspect, the appropriate data transmission speed can easily and accurately be set before the data communication is performed.

In further aspect of the present invention, the communication with said another information communication apparatus is performed by a serial transmission system.

According to this aspect, the data transmission speed can easily be set with respect to the communication which is performed by the serial transmission system.

In further aspect of the present invention, the communication with said another information communication apparatus, the transmission process, and a reception process conform to an Institute of Electrical and Electronic Engineers (IEEE) 1394 standard.

According to this aspect, the appropriate data transmission speed can easily and accurately be set with respect to the communication which conforms to the IEEE 1394 standard.
FIG. 1 is a diagram showing a constitution of a communication layer of an IEEE 1394 standard;
FIG. 2 is a diagram showing a constitution of a transaction packet of the IEEE 1394 standard;
FIG. 3A is an explanatory view of an operation of one asynchronous arbitration in the IEEE 1394 standard, and FIG. 3B is a diagram showing a constitution of an acknowledge packet in one asynchronous arbitration;
FIG. 4 is a block diagram showing a constitution of an information communication apparatus according to the present invention;
FIG. 5 is a flowchart showing an operation of a determination process of a transmission speed in a first embodiment;
FIG. 6 is a flowchart showing one example of the operation of the determination process of the transmission speed in the first embodiment;
FIG. 7 is a flowchart showing the operation of the determination process of the transmission speed in a second embodiment;
FIG. 8 is a flowchart showing one example of the operation of the determination process of the transmission speed in the second embodiment;
FIG. 9 is a diagram showing a packet constitution of self identification information in the IEEE 1394 standard;
FIG. 10 is a diagram showing a constitution of a bus information block in the IEEE 1394 standard; and
FIG. 11 is a diagram showing one example of a conventional determination operation of the transmission speed between nodes in the IEEE 1394 standard.

Preferred embodiments of the present invention will next be described with reference to the drawings.

It is to be noted that the embodiments described hereinafter refer to the present invention applied to an information communication apparatus including a serial bus conforming to an IEEE 1394 standard.

### I. IEEE 1394 Standard

First, an outline of the IEEE 1394 standard in conformity with which recording information is transmitted according to the embodiments will be described before concrete description of the embodiments.

As described above, in the IEEE 1394 standard, nodes as a plurality of information processing apparatuses are connected to one another via a serial bus, and information transmission for a plurality of channels is standardized to be executed among these nodes in a time division manner.

In the IEEE 1394 standard (hereinafter referred to simply as a serial bus standard), when another node is newly connected to a group of nodes already connected to one another via the serial bus (i.e., a bus connection time) or when the node is disconnected from the node group (i.e., a bus release time), initialization of the serial bus, so-called bus reset, is standardized to be executed. Moreover, with the bus reset, the following processing is executed, and a new topology of the serial bus is constructed.
(1) The node having detected a change of a connection state transmits a bus reset signal indicating occurrence of bus reset to another node connected via the serial bus, and the node having received the signal transmits the bus reset signal to still another connected node, so that the signal is transmitted to all the nodes.
(2) Subsequently, after the bus reset, the individually connected nodes are identified so as to be treated as the nodes connected in a tree shape, and orientations of all the connected nodes with respect to a root node are determined, so that one node is selected as the root node (tree identification process).
(3) Subsequently, the selected root node determines only one piece of identification information (physical ID) in the bus necessary for the identification of each node, and transmits self identification information (self-ID packet) necessary for bus management (self identification process).
(4) Finally, during a self identification procedure period, each node monitors the self-ID packets from the other nodes, and sets an isochronous resource manager (IRM) node which supplies a register for allocating communication channels and bands.

A new topology after the bus reset is constituted through the above-described four processes.

Subsequently, when the information is actually transmitted after the constitution of the topology, a transmission node as a node to start the transmission of the information refers the present communication state of another node to the IRM node. When the channel and band to be used by the self node are usable, the transmission node acquires a right to transmit the information (more concretely, the transmission node secures the channel and band for use by the transmission node) and starts the information transmission.

A communication layer will next be described which is connected to another information communication apparatus and which performs a communication control with the other information communication apparatus and transmits/receives the data.

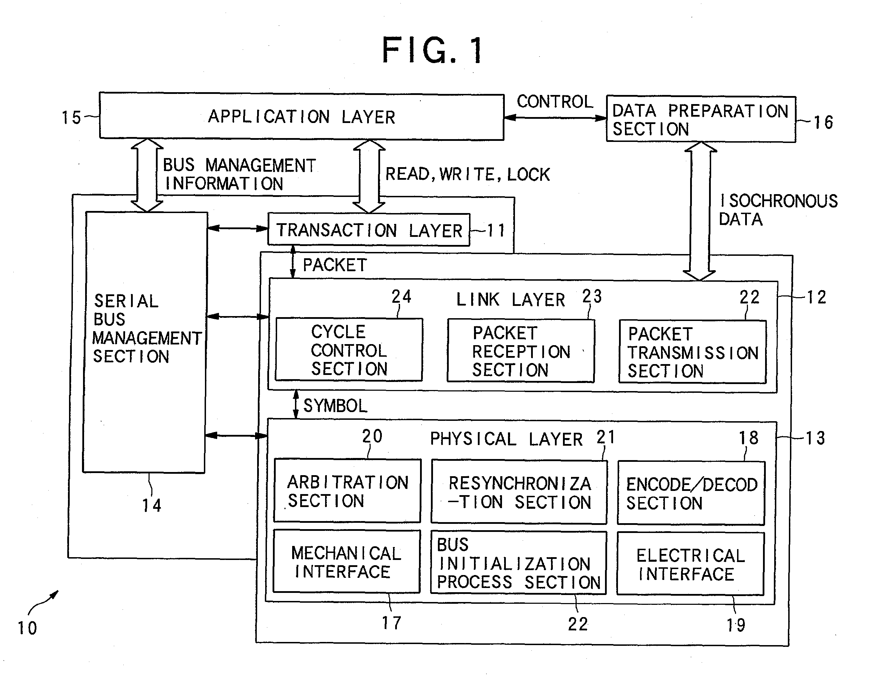

It is to be noted that FIG. 1 is an explanatory view of the communication layer defined by the IEEE 1394 standard.

As shown in FIG. 1, an IEEE 1394 standard communication layer 10 includes a serial bus management section 14 which manages a serial bus, and a three-layered structure including a transaction layer 11, link layer 12, and physical layer 13. The transaction layer 11, link layer 12, and physical layer 13 communicate with one another, and these layers individually communicate with the serial bus management section 14. Moreover, the transaction layer 11 and link layer 12 communicate with an application layer 15 as an upper function block.

Concretely, the transaction layer 11 performs read, write, and lock processes described later (hereinafter referred to as read, write, and lock transactions, respectively) to read and write the data in asynchronous transmission so that an asynchronous data transmission service for the application layer 15 to perform the data communication with the other apparatuses is provided.

It is to be noted that for the application layer 15 to transmit isochronous data, a data preparation section 16 prepares the data to be transmitted in a predetermined form and the data is transmitted to each apparatus.

The link layer 12 includes a packet transmission section 22 and packet reception section 23 which perform an address processing and data error check, and a cycle control section 24 which controls a cycle described later.

It is to be noted that a request for an isochronous transmission service described later is made to the link layer 12 from the application layer 15 not via the transaction layer 11. That is, the link layer 12 directly transmits/receives the isochronous data with respect to the data preparation section 16 which prepares various types of data in the predetermined form for the data transmission.

The physical layer 13 includes: a mechanical interface 17 which performs a mechanical interface process, such as a connector cable required for physical connection to the other information communication apparatuses; an encode/decode section 18 which converts a logic symbol for use in the link layer 12 and a signal for use in the physical layer 13; an electrical interface 19 which performs an electrical interface process to determine an electrical level of a communication signal; an arbitration section 20 to perform an arbitration process so that only one node starts the data transmission; a resynchronization section 21 which resynchronizes a communication clock; and a bus initialization process section 22 which executes reconfiguration of the IEEE 1394 serial bus with the bus reset.

Asynchronous and isochronous transfer modes will next be described briefly.

In the IEEE 1394 standard, the data is divided into packets, and transmitted on a basis of cycle having a length of 125 µsec in time division. This cycle is produced by a cycle start signal supplied from a node which has a cycle master function.

In the isochronous transfer mode, the data is transmitted by the isochronous transmission performed by an isochronous packet which secures a band necessary for the transmission from the top of all the cycles. In the isochronous transmission, the transmission of the data within a given time is guaranteed. However, there is no structure for protecting the data to be transmitted by the isochronous transmission, when a transmission error is generated. Therefore, the data having the error is lost.

Moreover, in the asynchronous transfer mode, in a time of each cycle unused by the isochronous transmission, as a result of arbitration, the node having secured the IEEE 1394 serial bus sends an asynchronous packet to perform the asynchronous transmission. For this asynchronous transmission, acknowledge and retry are used as described later to securely guarantee the transmission, but a transmission timing is hot constant.

It is to be noted that in the isochronous transmission, a time length of an isochronous transmission area in one isochronous cycle is standardized to be 100 µsec at maximum. Therefore, the information allocated to each channel in one isochronous transmission area needs to have a total transmission time of 100 µsec or less.

A transaction in the asynchronous transfer mode will next be described.

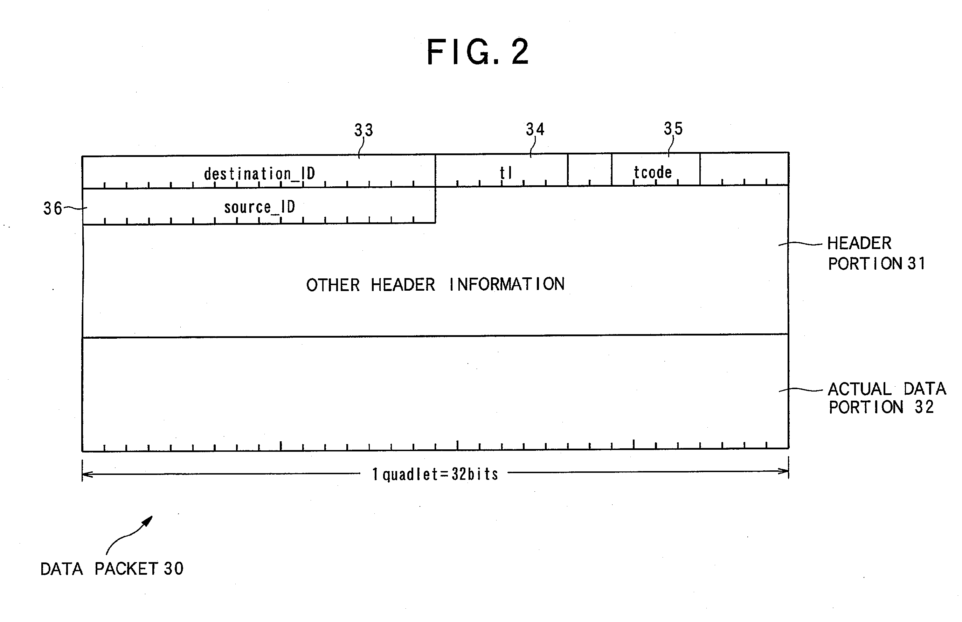

As described above, in the asynchronous transfer mode, the acknowledge and retry are used to perform the data transmission. As shown in FIG. 2, the transmission node transmits header information and actual data to a destination node, and the reception node returns an acknowledge packet to report the reception of the packet.

It is to be noted that as shown in FIG. 2 a data packet 30 to be transmitted in the asynchronous transfer mode is constituted of a header portion 31 and actual data portion 32. Moreover, (destination ID) 33 indicates identification information of a packet transmission destination, (tl) 34 indicates information for recognizing agreement of a pair of transactions of request and response packets, (tcode) 35 indicates type information of the transaction, and (source ID) 36 indicates the identification information of a transmitter of the packet.

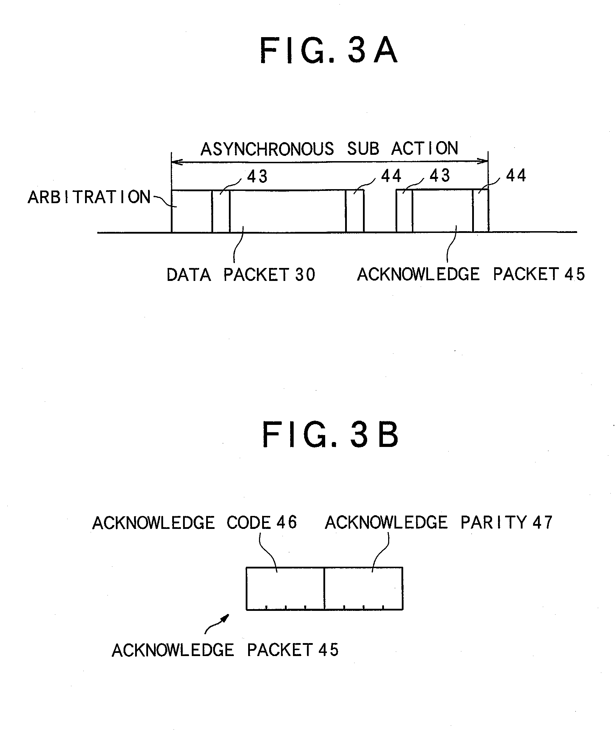

In this asynchronous transfer mode, a process of transmitting one piece of packet data (hereinafter referred to as an asynchronous sub action) is executed as follows (see FIG. 3A).

First, the node which is to transmit the packet starts arbitration in a data transmission waiting state. Subsequently, the transmission node which has overcome the arbitration, that is, which is ready to perform a transfer operation adds a reception waiting signal 43 instructing a reception state and data end information 44 to the data packet 30 including the header information and actual data, and transmits the data packet. Finally, the node having received the data transmits an acknowledge packet 45 indicating a reception situation to the transmission node immediately after the reception.

It is to be noted that as shown in FIG. 3B the acknowledge packet 45 includes not only the reception waiting signal 43 and data end information 44 but also an acknowledgment code 46 and acknowledgment parity 47.

These transaction functions include three types of functions: read; write; and lock. The read transaction is a function of reading a designated length of data from a target address of the opposite node, and the write transaction is a function of writing the designated length of data into the target address of the opposite node. Moreover, the lock transaction is a function of performing a given process by the transmission and reception nodes based on a predetermined instruction. Examples of this process include a compare swap transaction, mask swap transaction, and fetch address lock transaction.

### II. Embodiments

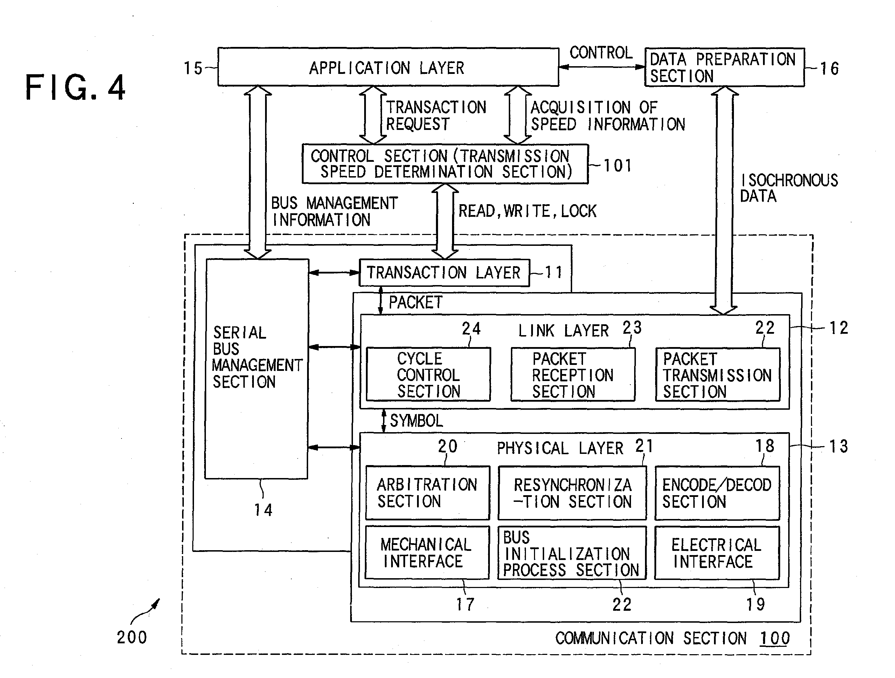

An information communication apparatus according to embodiments will next be described with reference to FIGS. 4 to 6. In the embodiments, a transmission speed at which the data is transmitted by the above-described IEEE 1394 standard is determined.

It is to be noted that in the present embodiments, a process (hereinafter referred to simply as a determination process) of using a read transaction operation to determine the transmission speed will be described.

### [First Embodiment]

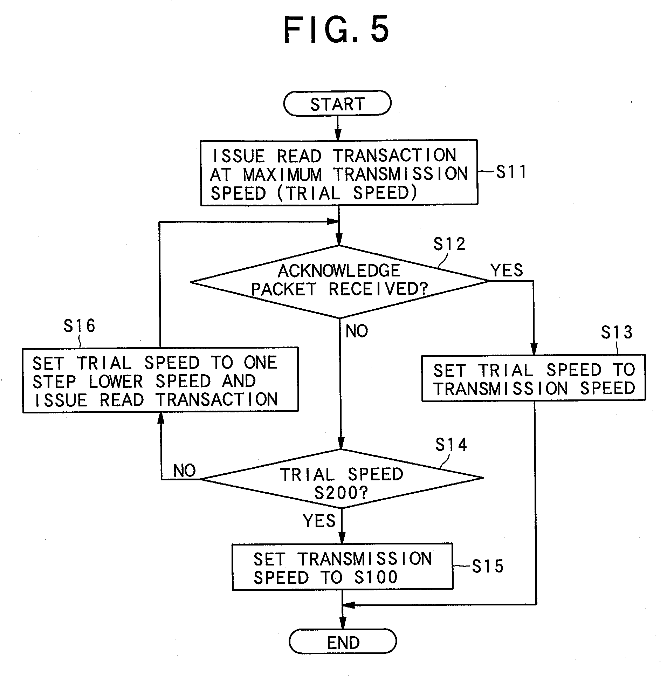

A constitution of the information communication apparatus in a first embodiment will first be described with reference to FIGS. 4, 5.

It is to be noted that FIG. 4 is a block diagram showing the constitution of the first embodiment, and FIG. 5 is a flowchart showing an operation of the transmission speed determination process in the first embodiment.

An information communication apparatus 200 shown in FIG. 4 includes: the application layer 15 which uses a protocol higher in rank than the 1394 standard and the 1394 standard to perform the communication; the data preparation section 16 which prepares communication data having a predetermined data form for transfer to the serial bus based on audio or video data; a communication section 100 including a communication layer having the three-layered structure of the transaction layer 11, link layer 12, and physical layer 13; and a control section 101 which controls the data preparation section 16 and communication section 100.

It is to be noted that the control section 101 constitutes transmission, detection, determination, setting and retransmission devicess according to the present invention.

The application layer 15 uses the protocol higher in rank than the 1394 standard and the 1394 standard to perform the communication, additionally operates the other apparatuses in response to a user's request, and informs a user of the apparatuses connected to the bus.

To the data preparation section 16, AV data such as audio and video data outputted from audio and video reproduction sections (not shown) are inputted. The data preparation section 16 holds real time properties of the inputted AV data, converts the data to communication data having a predetermined form, and outputs the converted communication data to the communication section 100.

As described above, the communication section 100 includes three layers of the transaction layer 11, link layer 12, and physical layer 13, and the serial bus management section 14. The transaction layer 11, link layer 12, and physical layer 13 have the above-described constitutions.

The control section 101 is mainly constituted of a CPU and memory, transmits/receives necessary control information via the bus, and generally controls the respective constituting members. Moreover, the information necessary for the general control is temporarily stored in the memory via the bus and used for the general control.

A determination process of the transmission speed of the first embodiment and a transmission speed for communicating with the other apparatuses will next be described with reference to FIG. 5.

It is to be noted that the determination process of the transmission speed is performed by the control section 101.

First, the control section 101 issues the read transaction at a maximum transmission speed of the self node (step S11). It is to be noted that the transmission speed in issuing the read transaction is referred to as a trial speed (TRY SPEED).

Concretely, the arbitration is performed. When the node overcomes the arbitration, the control section writes type information of the read transaction in the (source ID) 36 in the data packet 30, and transmits the data packet 30 to the opposite node via the transaction layer 11 at the maximum transmission speed.

Subsequently, the control section 101 judges whether or not the acknowledge packet 45 received by the transaction layer 11 is returned (step S12). The control section judges that the packet has been returned, and the control section 101 then sets the trial speed at which the read transaction is issued in the previous step (step S11, or step S16 described later) to the transmission speed at which the communication is performed (step S13), and ends the operation. That is, when the trial speed is the maximum transmission speed, the transmission speed is maximized.

On the other hand, the control section 101 judges that the acknowledge packet 45 is not returned, and then judges whether or not the trial speed in the issuance of the read transaction is S200 (step S14).

In this case, when the trial speed is judged to be S200, the transmission speed for performing the communication is set to S100 (step S15) and the control section 101 ends the operation. When the trial speed is judged to be other than S200, the trial speed for issuing the read transaction is changed to a one step lower speed, and the data packet 30 in the read transaction is again transmitted to the opposite node (step S16).

Thereafter, that is, after the data packet 30 in the read transaction is transmitted to the opposite node, the process shifts to the step S12, and the process of and after the step S12 is repeated.

The transmission speed for transmitting the communication data can be determined by the transaction function in the asynchronous transfer mode in this manner.

Moreover, for example, when the transmission speed is set to S400, S200, and S100 in order from the maximum transmission speed, the determination process of the transmission speed according to the first embodiment is as follows.

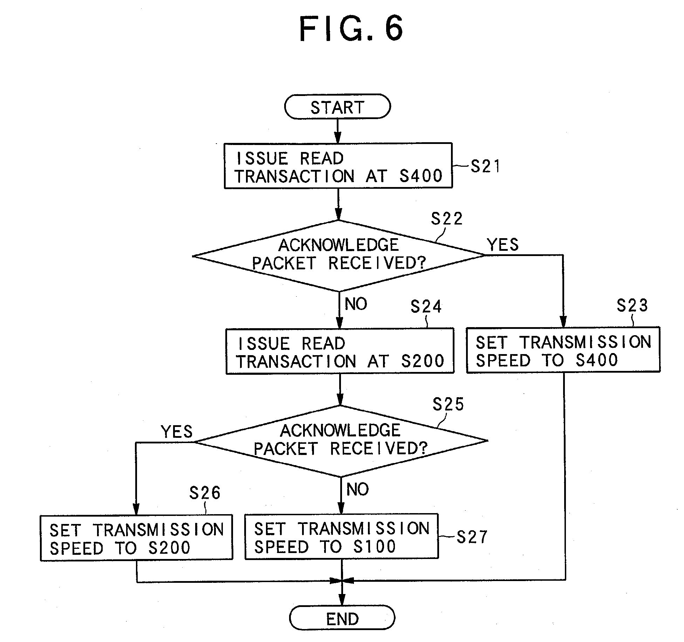

It is to be noted that FIG. 6 shows a flowchart of the determination process of the transmission speed of the first embodiment applied to the transmission speed set to S400, S200, and S100.

First, the control section 101 issues the read transaction by the maximum transmission speed (trial speed) S400 of the self node (step S21). Subsequently, the control section 101 judges whether or not the acknowledge packet 45 received by the transaction layer 11 is returned (step S22). When the control section 101 judges the packet to be returned, the control section sets the transmission speed to S400 (step S23) and ends the operation.

On the other hand, the control section 101 judges that the acknowledge packet 45 is not returned, then changes the transfer speed for issuing the read transaction to a one step lower speed (S200), again transmits the data packet 30 in the read transaction to the opposite node (step S24), and again judges whether or not the acknowledge packet 45 received by the transaction layer 11 is returned (step S25). When the control section judges the packet to be returned, the section sets the trial speed S200 to the transmission speed and ends the operation (step S26).

On the other hand, the control section 101 judges that the acknowledge packet 45 is not returned, and sets the minimum transmission speed S100 to the transmission speed (step S27).

As described above, according to the first embodiment, any one of a plurality of transmission speeds is used to transmit the read transaction, and the acknowledge packet indicating that another information communication apparatus has received a request for the transaction is detected. In this case, the transmission speed for transmitting the read transaction is set to the transmission speed of the data communication. When this acknowledge packet is not detected, the transmission speed is changed to the transmission speed lower than the transmission speed for use in the transmission of the transaction, and confirmation information can be retransmitted. Therefore, an optimum transmission speed can easily and accurately be set in the IEEE 1394 standard.

Moreover, the transmission speed is successively changed to the low speed and the read transaction is repeatedly issued until the acknowledge packet is detected. Therefore, it is possible to easily detect a transmission speed at which the communication is possible in the IEEE 1394 standard.

It is to be noted that in the first embodiment the transmission speed is determined by the read transaction function in the asynchronous transfer mode, but transmission speed may also be determined, when another transaction is issued.

Moreover, in the first embodiment, the transmission speed set to S100, S200, and S400 has been described. When the information communication apparatus having the transmission speed equal to or higher than the above-described transmission speed is recognized by the topology analysis, the process is started at the maximum speed recognized by the topology analysis.

Furthermore, in the first embodiment, the control section 101 issues the read transaction and performs the determination process of the transmission speed. However, a computer and recording medium may be disposed in the control section 101, the program for performing the determination process of the transmission speed may be stored in the recording medium directly or via networks such as Internet, and the stored program may be read by the computer to execute the determination process of the transmission speed.

### [Second Embodiment]

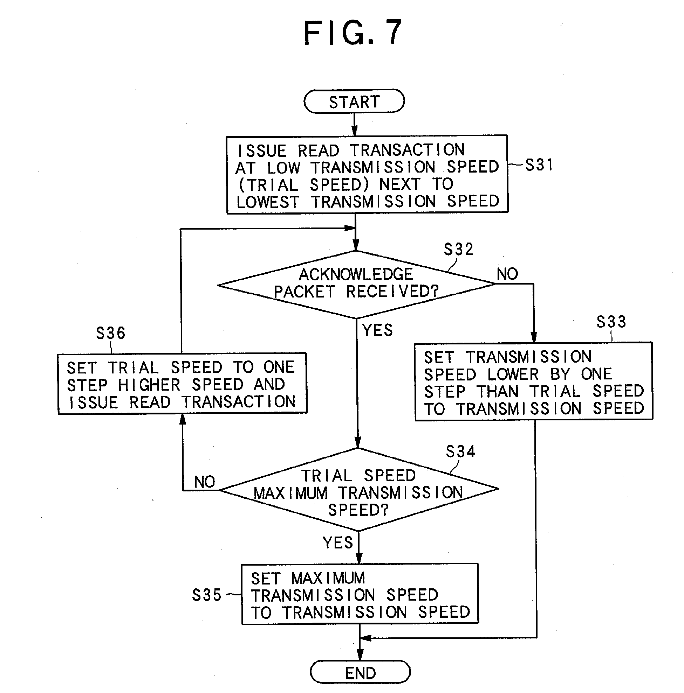

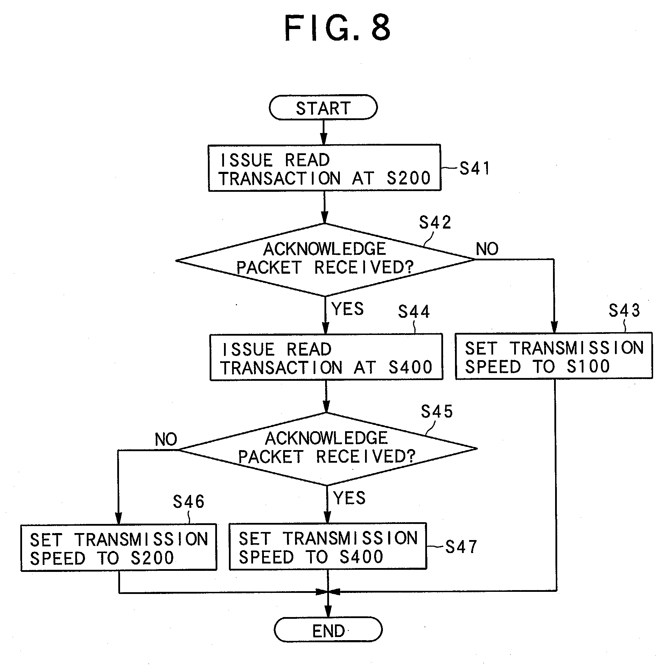

The constitution of the information communication apparatus in a second embodiment will next be described with reference to FIGS. 7, 8.

It is to be noted that in the first embodiment the transmission speed is successively changed to the low speed from the maximum transmission speed of the self node and the transmission speed of the communication data is determined. The second embodiment is different in that the transmission speed is successively changed to a high transmission speed from the minimum transmission speed of the self node and the transmission speed of the communication data is determined. The second embodiment is similar to the first embodiment in the other constitutions of the information communication apparatus. Therefore, the same member is denoted with the same reference numeral and the description thereof is omitted.

Moreover, FIG. 7 is a flowchart showing the operation of the transmission speed determination process of the second embodiment.

Furthermore, similarly as the first embodiment, the determination process of the transmission speed is controlled by the control section 101, and the optimum transmission speeds of the self and opposite nodes are determined.

First, the control section 101 issues the read transaction using the low transmission speed next to the lowest transmission speed of the self node as the trial speed (step S31).

Concretely, similarly as the first embodiment, the arbitration is performed. When the node overcomes the arbitration, the control section writes the type information of the read transaction in (source ID) 36 in the data packet 30, and transmits the data packet 30 to the opposite node at the low transmission speed next to the lowest transmission speed via the transaction layer 11.

It is to be noted that the lowest transmission speed (usually S100) is recognized in all the nodes. Therefore, the read transaction is issued using the low transmission speed next to the lowest transmission speed as the trial speed. Additionally, the transaction may also be issued at the lowest transmission speed.

Subsequently, the control section 101 judges whether or not the acknowledge packet 45 received by the transaction layer 11 is returned (step S32). When the control section 101 judges the packet not to be returned, the section sets the transmission speed lower by one step than the trial speed used in issuing the read transaction in the previous step (step S31, or step S36 described later) to the transmission speed for performing the communication (step S33), and ends the operation.

On the other hand, the control section 101 judges that the acknowledge packet 45 is returned, and judges whether or not the trial speed used in issuing the read transaction is the maximum transmission speed (step S34).

In this case, when the trial speed used in issuing the read transaction by the previous step (step S31, or step S36 described later) is judged to be the maximum transmission speed in the step S32, the transmission speed for performing the communication is set to the maximum transmission speed of the self node (step S35) and the control section 101 ends the operation. When the trial speed used in issuing the read transaction is judged to be other than the maximum transmission speed, the trial speed for issuing the read transaction is changed to a one step higher speed, and the data packet 30 in the read transaction is transmitted to the opposite node (step S36).

Thereafter, that is, after the data packet 30 in the read transaction is again transmitted to the opposite node, the process shifts to step S32, and the process of and after the step S32 is repeated.

As described above, the transmission speed for transmitting the communication data can be determined by the transaction function in the asynchronous transfer mode.

Moreover, for example, when the speed is set to S400, S200, and S100 in order from the maximum transmission speed, the determination process of the transmission speed of the second embodiment is as follows.

It is to be noted that FIG. 8 is a flowchart of the determination process of the transmission speed of the second embodiment applied to the transmission speed set to S400, S200, and S100.

First, the control section 101 sets the trial speed of the self node to S200 and issues the read transaction at the trial speed (step S41).

Subsequently, the control section 101 judges whether or not the acknowledge packet 45 received by the transaction layer 11 is returned (step S42). When the control section 101 judges the packet not to be returned, the control section sets the transmission speed to S100 (step S43) and ends the operation.

On the other hand, the control section 101 judges that the acknowledge packet 45 has been returned, then changes the trial speed for issuing the read transaction to a one step higher speed (S400), and again transmits the data packet 30 in the read transaction to the opposite node (step S44).

Subsequently, the control section 101 again judges whether or not the acknowledge packet 45 received by the transaction layer 11 is returned (step S45). When the control section 101 judges the packet to be returned, the section sets the maximum transmission speed S400 to the transmission speed and ends the operation (step S46).

On the other hand, the control section 101 judges that the acknowledge packet 45 is not returned, sets the trial speed S200 to the transmission speed (step S47), and ends the operation.

As described above, according to the second embodiment, among a plurality of transmission speeds, first the low transmission speed next to the lowest transmission speed is used to transmit the read transaction. When the acknowledge packet transmitted from another information communication apparatus is detected, the transmission speed is successively changed to the transmission speed higher than the transmission speed for use in the transmission of the transaction and confirmation information is retransmitted. The transmission of the confirmation information is repeated until the acknowledge packet is not detected any more. Moreover, the data communication can be performed at the one step lower transmission speed, when the acknowledge packet cannot be detected. Therefore, a communicable transmission speed can easily be detected in the IEEE 1394 standard, and the optimum transmission speed can easily be set in the IEEE 1394 standard.

It is to be noted that in the second embodiment the transmission speed is determined by the read transaction function in the asynchronous transfer mode, but the transmission speed may also be determined when the other transactions are issued.

Moreover, in the second embodiment, different from the first embodiment, in the determination process of the transmission speed in the control section 101, the transmission speed for issuing the transaction is changed in order from the low transmission speed. However, the control section may acquire the maximum transmission speed of all the nodes in all connections, and select the high or low transmission speed at which the transaction is issued based on the acquired maximum transmission speed.

That is, when the maximum transmission speed in all the nodes is high, for example, when a large number of nodes use S400, the transaction is issued at the high transmission speed. When the transmission speed is low, for example, when a large number of nodes indicate S100 or an unclear speed, the transaction is issued at the low transmission speed.

In this case, the control section 101 judges whether the transaction is issued at the high or low transmission speed based on the maximum transmission speed of the connected apparatus, before performing the determination process of the transmission speed. It is judged that the transaction is to be issued at the high transmission speed, and the determination process of the transmission speed of the first embodiment is performed (see FIG. 5). Alternatively, it is judged that the transaction is to be issued at the low transmission speed, and the determination process of the transmission speed of the second embodiment is performed (see FIG. 7).

According to the constitution, when there are many information communication apparatuses having the high transmission speed in the connected information communication apparatuses, or when there are many information communication apparatuses having the low transmission speed, the transmission speed can be determined in a short time in the transmission speed determination process.

Furthermore, in the second embodiment, the transmission speeds of S100, S200, and S400 have been described. However, when an information communication apparatus having a higher transmission speed is recognized by the topology analysis, the process is performed up to the maximum speed recognized by the topology analysis.

Additionally, in the second embodiment, the control section 101 issues the read transaction and performs the determination process of the transmission speed. However, the computer and recording medium may be disposed in the control section 101, so that the program for performing the determination process of the transmission speed may be stored in the recording medium directly or via the networks such as Internet, and the stored program may be read by the computer to execute the determination process of the transmission speed.

As described above, according to the present invention, any one of a plurality of transmission speeds is used to transmit the confirmation information, the reception information indicating that another information communication apparatus has normally received the confirmation information is detected, and the data transmission speed is determined based on the presence/absence of the detection of the reception information. Therefore, the data transmission speed for transmitting the data can be determined by the transmission speed at which the confirmation information is normally received in a plurality of transmission speeds. Moreover, it can be judged whether or not the information has normally been received only by the presence/absence of the detection of the reception information. Therefore, the optimum transmission speed can easily be set.

## Claims

1. An information communication apparatus (200) for setting any one of a plurality of transmission speeds to a data transmission speed as a transmission speed at a time when data communication with another information communication apparatus is performed, and for performing the data communication, **characterized in that** the apparatus comprises:
a transmission device (101) which uses any one of the plurality of transmission speeds to transmit confirmation information for confirming whether or not the data communication with said another information communication apparatus can be performed;
a detection device (101) which detects reception information indicating that said another information communication apparatus has normally received the confirmation information, the reception information being transmitted from said another information communication apparatus; and
a determination device (101) which determines the data transmission speed based on presence or absence of detection of the reception information in the detection device.

2. The information communication apparatus (200) according to claim 1, wherein the determination device (101) comprises:
a setting device (101) for setting the transmission speed at a time when the transmission device has transmitted the confirmation information to the data transmission speed, when the detection device detects the reception information; and
a retransmission device (101) for retransmitting the confirmation information at the transmission speed different from the transmission speed at the time when the transmission device has transmitted the confirmation information, when the detection device does not detect the reception information.

3. The information communication apparatus (200) according to claim 2, wherein the retransmission device (101) repeatedly changes the transmission speed and repeatedly retransmits the confirmation information until the detection device detects the reception information.

4. The information communication apparatus (200) according to claim 3, wherein the retransmission device (101) successively changes the transmission speed to the transmission speed lower than the transmission speed of the confirmation information and retransmits the confirmation information, when the detection device does not detect the reception information.

5. The information communication apparatus (200) according to claim 1, wherein the determination device (101) comprises:
a retransmission device (101) for retransmitting the confirmation information at the transmission speed different from the transmission speed at the time when the transmission device has transmitted the confirmation information, when the detection device detects the reception information; and
a setting device (101) for setting the transmission speed lower than the transmission speed at the time when the confirmation information has been transmitted to the data transmission speed, when the detection device does not detect the reception information.

6. The information communication apparatus (101) according to claim 5, wherein the retransmission device (101) repeatedly changes the transmission speed and repeatedly retransmits the confirmation information until the detection device does not detect the reception information.

7. The information communication apparatus (200) according to claim 6, wherein the retransmission device (101) successively changes the transmission speed to the transmission speed higher than the transmission speed of the confirmation information and retransmits the confirmation information, when the detection device detects said reception information.

8. The information communication apparatus (200) according to any one of claims 5 to 7, wherein the transmission device (101) starts the transmission of the confirmation information at a low transmission speed next to a lowest transmission speed.

9. The information communication apparatus (200) according to any one of claims 1 to 8, wherein the apparatus further comprises:
a selection device (101) for selecting a change order of the transmission speed of the confirmation information as to whether the retransmission device successively changes the transmission speed to the low transmission speed from the high transmission speed or to the high transmission speed from the low transmission speed to retransmit the confirmation information; and
an acquisition device (101) for acquiring information of a maximum transmission speed in said another information communication apparatus beforehand,
wherein the selection device selects the change order of the transmission speed based on the acquired maximum transmission speed.

10. The information communication apparatus (200) according to any one of claims 1 to 9, wherein the confirmation information is communication request information by which said another information communication apparatus is requested to perform the data communication.

11. The information communication apparatus (200) according to claim any one of claims 1 to 10, wherein the communication with said another information communication apparatus is performed by a serial transmission system.

12. The information communication apparatus (200) according to any one of claims 1 to 11, wherein the communication with said another information communication apparatus, the transmission device, and the reception device conform to an Institute of Electrical and Electronic Engineers (IEEE) 1394 standard.

13. An information communication method of setting any one of a plurality of transmission speeds to a data transmission speed as a transmission speed at a time when data communication with another information communication apparatus is performed, and performing the data communication, **characterized in that** the method comprises:
a transmission process of using any one of the plurality of transmission speeds to transmit confirmation information for confirming whether or not the data communication with said another information communication apparatus can be performed;
a detection process of detecting reception information indicating that said another information communication apparatus has normally received the confirmation information, the reception information being transmitted from said another information communication apparatus; and
a determination process of determining the data transmission speed based on presence or absence of detection of the reception information in the detection process.

14. The information communication method according to claim 13, wherein the determination process comprises:
a setting process of setting the transmission speed at a time when the confirmation information has been transmitted by the transmission process to the data transmission speed, when the reception information is detected by the detection process; and
a retransmission process of retransmitting the confirmation information at the transmission speed different from the transmission speed at the time when the confirmation information has been transmitted by the transmission process, when the reception information is not detected by said detection process.

15. The information communication method according to claim 14, wherein the retransmission process comprises the processes of: repeatedly changing the transmission speed and repeatedly retransmitting the confirmation information until the reception information is detected by the detection process.

16. The information communication method according to claim 15, wherein the retransmission process comprises the processes of: successively changing the transmission speed to the transmission speed lower than the transmission speed of the confirmation information and retransmitting the confirmation information, when the reception information is not detected by the detection process.

17. The information communication method according to claim 13 wherein the determination process comprises:
a retransmission process of retransmitting the confirmation information at the transmission speed different from the transmission speed at the time when the confirmation information has been transmitted by the transmission process, when the reception information is detected by the detection process; and
a setting process of setting the transmission speed lower than the transmission speed at the time when the confirmation information has been transmitted to the data transmission speed, when said reception information is not detected by the detection process.

18. The information communication method according to claim 17, wherein the retransmission process comprises the processes of: repeatedly changing the transmission speed and repeatedly retransmitting the confirmation information until the reception information is not detected by the detection process.

19. The information communication method according to claim 18, wherein the retransmission process comprises the processes of: successively changing the transmission speed to the transmission speed higher than the transmission speed of the confirmation information and retransmitting the confirmation information, when the reception information is detected by the detection process.

20. The information communication method according to any one of claims 17 to 19, wherein the transmission process comprises the processes of: starting the transmission of the confirmation information at a low transmission speed next to a lowest transmission speed.

21. The information communication method according to any one of claims 13 to 20, wherein the method further comprises:
a selection process of selecting a change order of the transmission speed of the confirmation information as to whether the transmission speed is successively changed to the low transmission speed from the high transmission speed or to the high transmission speed from the low transmission speed to retransmit the confirmation information by the retransmission process; and
an acquisition process of acquiring information of a maximum transmission speed in the another information communication apparatus beforehand,
wherein the selection process comprises the steps of: selecting the change order of the transmission speed based on the acquired maximum transmission speed.

22. The information communication method according to any one of claims 13 to 21, wherein the confirmation information is communication request information by which said another information communication apparatus is requested to perform the data communication.

23. The information communication method according to any one of claims 13 to 22, wherein the communication with said another information communication apparatus is performed by a serial transmission system.

24. The information communication method according to any one of claims 13 to 23, wherein the communication with said another information communication apparatus, the transmission process, and a reception process conform to an Institute of Electrical and Electronic Engineers (IEEE) 1394 standard.

25. An information communication process program embodied on an information recording medium for setting any one of a plurality of transmission speeds to a data transmission speed as a transmission speed at a time when data communication with another information communication apparatus is performed, and for performing the data communication by a computer, **characterized in that** the program causes the computer to function as:
a transmission device (101) for using any one of the plurality of transmission speeds to transmit confirmation information for confirming whether or not the data communication with said another information communication apparatus can be performed;
a detection device (101) for detecting reception information indicating that said another information communication apparatus has normally received the confirmation information, the reception information being transmitted from said another information communication apparatus; and
a determination device (101) for determining the data transmission speed based on presence or absence of detection of said reception information.

26. The information communication process program embodied on an information recording medium according to claim 25, wherein the program causes the computer to function as:
a setting device (101) for setting the transmission speed at a time when the confirmation information has been transmitted to the data transmission speed, when the confirmation information is transmitted and the reception information is detected; and
a retransmission device (101) for retransmitting the confirmation information at the transmission speed different from the transmission speed at the time when the confirmation information has been transmitted, when the detection device does not detect the reception information.

27. The information communication process program embodied on an information recording medium according to claim 26, wherein the program causes the computer to function as a retransmission device (101) for repeatedly changing the transmission speed and repeatedly retransmitting the confirmation information until the reception information is detected.

28. The information communication process program embodied on an information recording medium according to claim 27, wherein the program causes the computer to function as a retransmission device (101) for successively changing the transmission speed to the transmission speed lower than the transmission speed of the confirmation information and retransmitting the confirmation information, when the reception information is not detected.

29. The information communication process program embodied on an information recording medium according to claim 25, wherein the program causes the computer to function as:
a retransmission device (101) for retransmitting the confirmation information at the transmission speed different from the transmission speed at the time when the confirmation information has been transmitted, when the confirmation information is transmitted and the reception information is detected; and
a setting device (101) for setting the transmission speed lower than the transmission speed at the time when the confirmation information has been transmitted to the data transmission speed, when the reception information is not detected.

30. The information communication process program embodied on an information recording medium according to claim 29, wherein the program causes the computer to function as a retransmission device (101) for repeatedly changing the transmission speed and repeatedly retransmitting the confirmation information until the reception information is not detected.

31. The information communication process program embodied on an information recording medium according to claim 30, wherein the program causes the computer to function as a retransmission device for successively changing the transmission speed to the transmission speed higher than the transmission speed of the confirmation information and retransmitting the confirmation information, when the reception information is detected.

32. The information communication process program embodied on an information recording medium according to any one of claims 29 to 31, wherein the program causes the computer to function as a transmission device for starting the transmission of the confirmation information at a low transmission speed next to a lowest transmission speed.

33. The information communication process program embodied on an information recording medium according to any one of claims 25 to 32, wherein the program causes the computer to function as:
a selection device (101) for selecting a change order of the transmission speed of the confirmation information as to whether the transmission speed is successively changed to the low transmission speed from the high transmission speed or to the high transmission speed from the low transmission speed to retransmit the confirmation information; and
an acquisition device (101) for acquiring information of a maximum transmission speed in said another information communication apparatus beforehand,
wherein a selection device selects the change order of the transmission speed based on the acquired maximum transmission speed.

34. The information communication process program embodied on an information recording medium according to any one of claims 25 to 33, wherein the confirmation information is communication request information by which said another information communication apparatus is requested to perform said data communication.

35. The information communication process program embodied on an information recording medium according to any one of claims 25 to 34, wherein the communication with said another information communication apparatus is performed by a serial transmission system.

36. The information communication process program embodied on an information recording medium according to any one of claims 25 to 35, wherein the communication with said another information communication apparatus, the transmission device, and a reception device conform to an Institute of Electrical and Electronic Engineers (IEEE) 1394 standard.
